(19) Europäisches Patentamt
European Patent Office
Office européen des brevets

(11) Publication number: **0 366 071 A2**

(12) # EUROPEAN PATENT APPLICATION

(21) Application number: **89119727.9**

(51) Int. Cl.5: **A01N 25/10 , A01N 25/24**

(22) Date of filing: **24.10.89**

(30) Priority: **28.10.88 JP 274245/88**

(43) Date of publication of application:
**02.05.90 Bulletin 90/18**

(84) Designated Contracting States:
**BE DE FR GB NL SE**

(71) Applicant: **DAIKIN INDUSTRIES, LIMITED**
**Umeda Center Building, 4-12, Nakazaki-nishi**
**2-chome, Kita-ku**
**Osaka-shi, Osaka-fu(JP)**

(72) Inventor: **Maeda, Masahiko**
**1-3-41-502, Meitoku**
**Neyagawa-shi Osaka-fu(JP)**
Inventor: **Masutani, Tetsuya**
**1-4-24-1106 Nagarahigashi Oyodo-ku**
**Osaka-shi Osaka-fu(JP)**
Inventor: **Yoshida, Tutomu**
**1-1-1006, Higashiota**
**Ibaraki-shi Osaka-fu(JP)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) **A bactericidal and mildewcidal composition.**

(57) An improved bactericidal and mildewcidal effect and a repellent effect on substrates can be achieved easily and simultaneously by a composition of at least one bactericidal and mildewcidal agent and at least one repellent without deteriorating the substrates.

EP 0 366 071 A2

# A BACTERICIDAL AND MILDEWCIDAL COMPOSITION

## BACKGROUND OF THE INVENTION

### Field of the Invention

The present invention relates to a composition of at least one bactericidal and mildewcidal agent with at least one repellent, which can not only keep substrates such as leather goods, shoes, rain apparel, clothes, walls in a bath room and indoor and outdoor building materials from moisture such as the rain and waterdrops and from aqueous and oily soils, but also protect the substrates from the attack of mildew and bacteria which may cause discomfort or disagreeable odor.

### Description of the Related Art

The leather goods such as leather shoes, a leather jumper and a leather bag, the shoes such as sneakers and bouts, the rain apparel such as a rain coat and an umbrella, and the clothes such as a sportswear are frequently exposed to moisture and the aqueous soils. For the purpose of protecting the necessaries, various repellents, for example of spray-type, which can be easily applied to the substrates have been marketed and widely used. Such agents are also intended to repel mud and the oily soils.

In addition, the above-mentioned necessaries as well as the bath-room walls and the building materials which are usually exposed to the aqueous soils and humidity are susceptible to the attack of mildew and bacteria which may result in unpleasantness and the deterioration of the materials. In order to overcome the problems, various bactericidal or mildewcidal compositions have been applied to the substrates by spraying or coating.

However, none of the conventional surface-treating preparations is satisfactory with regard to simultaneous improvement of repellency and mildew- and bacteria-resistance and to handling.

## SUMMARY OF THE INVENTION

An object of the present invention is to provide a bactericidal and mildewcidal composition which can be easily applied on the substrates and show both an improved bactericidal and mildewcidal activity as well as water- and/or oil-repellent effect without deteriorating the substrates.

According to the present invention, the object can be achieved by a certain composition of at least one bactericidal and mildewcidal agent with at least one repellent.

## DETAILED DESCRIPTION OF THE INVENTION

As the bactericidal and mildewcidal agent in the present composition, conventional one can be suitably used. The following compounds are preferred:

N-halomethyl group-containing compounds such as N-trichloromethylthiotetrahydrophthalimide, N-trichloromethylthiophtalimide, N-fluorodichloromethylthiophthalimide, N-1,1,2,2-tetrachloroethylthiotetrahydrophthalimide and N,N-dimethyl-N′-(fluorodichloromethylthio)-N′-phenylsulfamide,

benzimidazole and benzothiazole compounds such as thiabendazole, which is 2-(4-thiazolyl)-benzimidazole, and 2-(4-thiocyanomethylthio)-benzothiazole,

phenol compounds such as 2,5-dichloro-4-bromophenol, p-chloro-m-xylenol, p-nitrophenol, 2-chloro-4-nitrophenol, o-phenylphenol, bis-(4-nitrophenyl) carbonate, 2,4,5-trichlorophenol, sodium salts thereof and esters thereof with capric acid and lauric acid, and

other compounds such as α-bromocinnamaldehyde, organotin compounds, tetramethylthiuram disulfide, salicylanilides, hexamethylenebiguanidine hydrochloride, 2-pyridinethiol sodium 1-oxide, α-bromo-p-chlorobenzalacetone, hexylphenol and hexylresorcinol.

These compounds can be used as such or in the form of admixture.

The repellent in the present composition may also be conventional one.

Preferred repellents are fluoroalkyl group-containing compounds, the fluoroalkyl group having 3 to 20,

preferably 6 to 12 carbon atoms. The fluorine-containing compound can be selected from the groups (1) to (4):

(1) Homopolymers of vinyl monomers having $C_3$-$C_{20}$-fluoroalkyl groups or copolymers of at least one of the fluoroalkyl group-containing vinyl monomer with at least one fluorine-free vinyl monomer

Examples of the fluoroalkyl group-containing vinyl monomer are as follows:
$C_7F_{15}CH_2OCOCH=CH_2$
$C_8F_{17}SO_2N(C_3H_7)CH_2CH_2OCOCH=CH_2$
$C_8F_{17}SO_2N(CH_3)CH_2CH_2OCOC(CH_3)=CH_2$

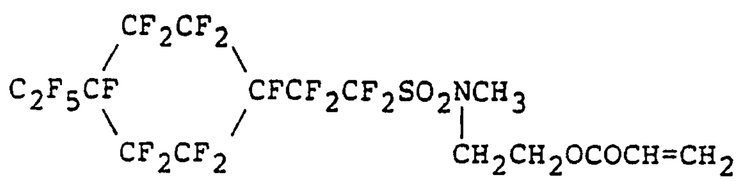

$C_7F_{15}CON(C_2H_5)CH_2CH_2OCOC(CH_3)=CH_2$
$CF_3(CF_2)_8CH_2CH_2OCOCH=CH_2$
$CF_3(CF_2)_9CH_2CH_2OCH=CH_2$
$C_8F_{17}(CF_2)_{11}OCOC(CH_3)=CH_2$
$C_8F_{17}CH_2CH(OH)CH_2OCOC(CH_3)=CH_2$
$(CF_3)_2CFO(CH_2)_5OCOCH=CH_2$
$C_2F_5(OCF_2CF_2)_3OCF_2CF_2CON(CH_3)CH_2CH_2OCOCH=CH_2$
$C_8F_{17}SO_2N(CH_2CH_2OCOCH=CH_2)_2$
$C_8F_{17}SO_2N(CH_3)(CH_2)_{10}COOCH_2CH=CH_2$
$C_8F_{17}SO_2N(C_2H_5)CH_2CH_2OCOCH=CHCOOC_4H_9$
$C_6F_{13}SO_2N(CH_3)CH_2CH_2OCOCH=CH_2$ and
$C_8F_{17}SO_2NHCH_2CH_2SO_2CH=CH_2$

The fluorine-free vinyl monomer may be selected from the group consisting of ethylene, propylene, butylene, butadiene, isoprene, chloroprene, vinyl chloride, vinylidene chloride, styrene, (meth)acrylic acid ester or amide of an alcohol or alkylamine each having not more than 20 carbon atoms, diacetone acrylamide, N-methylol acrylamide, acrylo nitrile, acrylamide, vinyl acetate and siloxane bond-containing vinyl compounds.

The homopolymers and copolymers can be prepared by conventional vinyl polymerization such as solution- or emulsion-polymerization with using a free-radical initiator. The molecular weight of the polymer is preferably above 3000, which can be suitably regulated with the type and the concentration of the initiator and a chain transfer agent.

(2) (Poly)esters of mono- or poly-hydric alcohols with mono- or poly-basic carboxylic acids, wherein one of the components contains the $C_3$-$C_{20}$-fluoroalkyl group and the other may be fluorinated

Examples of the components are as follows:
$C_9F_{19}CH_2CH_2OH$
$C_8F_{17}SO_2N(C_3H_7)CH_2CH_2OH$
$C_8F_{17}SO_2N(CH_2CH_2OH)_2$
$C_8F_{17}SO_2N(C_2H_5)CH_2CH(OH)CH_2OH$
$C_7F_{15}COOH$
$C_8F_{17}SO_2N(C_3H_7)CH_2COOH$ and
$C_6F_{13}CH_2CH_2CH(COOH)_2$

Following compounds are also preferred: benzoic acid, adipic acid, sebacic acid, phthalic acid, maleic acid, trimellitic acid, ethylene glycol monomethyl ether, ethylene glycol, propylene glycol, diethylene glycol, glycerol, polypropylene glycol, 2-ethylhexanol and stearyl alcohol. The polyester preferably has a molecular

weight of above 1000.

(3) (Poly)urethanes of mono- or poly-hydric alcohols having the $C_3$-$C_{20}$-fluoroalkyl groups with mono- or poly-functional isocyanates

The fluoroalkyl group-containing alcohol may be used in the form of a mixture with a fluorine-free mono- or poly-hydric alcohol. As the isocyanate, phenyl isocyanate, tolylene diisocyanate, diphenylmethane diisocyanate, hexametnylene diisocyanate and polymethylenepolyphenyl isocyanate can be used.

The molecular weight of the (poly)urethane is preferably at least 700.

(4) Homopolymers of epoxy compounds having the $C_3$-$C_{20}$-fluoroalkyl groups and, in particular, homopolymers of the epoxy compounds with fluorine-free epoxy compounds such as propylene oxide and epichlorohydrin

Examples of the fluoroalkyl group-containing epoxy compounds are as follows:

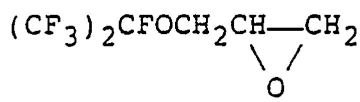

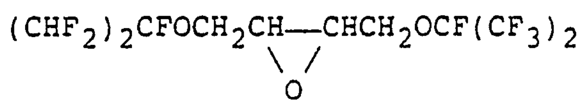

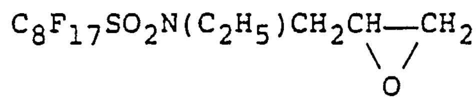

and

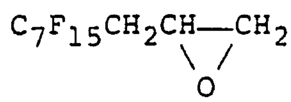

The molecular weight of the polymer is preferably at least 3000.

As the fluorine-containing repellent mentioned above, for example Texgard TG-620 (Daikin), Asahiguard AG-670 (Asahi Glass) and FC-905 (3M) are available.

In the present bactericidal and mildewcidal composition, the fluorine-containing repellent can be displaced by a silicone compound such as silicone oil and an emulsion or dispersion thereof. For example, Toray Silicone SD-8000 (Toray) can be used as the silicone repellent.

In the present composition, the weight ratio of the bactericidal and mildewcidal agent to the repellent is preferably 100 : 1 to 1 : 100.

The present composition may be dissolved in an organic solvent so as to apply the composition onto the surface of the substrates by spraying or coating. The organic solvent can be selected from the group consisting of n-hexane, n-heptane, gasoline, petroleum benzine, benzene, toluene, isopropyl alcohol, butanol, methyl ethyl ketone, 1,1,1-trichloroethane, trichloroethylene, diethyl ether, methylene chloride, fluorocarbons and mixtures thereof. If desired, a silicone compound or wax which is usually used for surface-treatment can be added into the solvent.

The content of the present composition in the solution is 0.001 to 50 % by weight based on the organic solvent. The silicone or wax additive may be used in an amount of 0.001 to 50 % by weight based on the whole solution.

The present composition can be easily applied onto the substrates and show a synergistic bactericidal and mildewcidal activity due to the content of the repellent without deteriorating the substrates.

## PREFERRED EMBODIMENT OF THE INVENTION

The present invention is explained more in detail by following Example. However, the invention is not restricted by the Example.

(A) Preparation of test leather pieces

Test leather pieces (each 15 mm x 15 mm) were immersed in a potato dextrose solution medium (PDS medium). Then, the pieces absorbing the medium were dried in a desiccator at 60 °C.

(B) Preparation of spore suspensions of test strains

As the test strains, Alternaria alternata and Penicillium sp. were used. The each strain was cultured on a PDA plate for 10 days at 28 °C with shading. The obtained spores were dispersed in a 10 ppm S.A.A. solubilizing sterilized water containing 10 ppm of Tween 20 (polyoxyethylene sorbitan monolaurate) and filtered through double gauze. Then, by the addition of the S.A.A. solubilizing sterilized water, the concentration of the spores was regulated to 1 x $10^6$ spores/ml.

(C) Surface treatment

Each of test compositions shown in Tables 1 to 3 was dissolved in a solvent mixture consisting of 50 % by weight of 1,1,2-trichloro-1,1,2-trifluoroethane and 50 % by weight of 1,1,1-trichloroethane to form a solution having a predetermined concentration. The solution was uniformly applied onto the test leather pieces prepared in (A) in an amount of 3 ml/100 $cm^2$ by using a microsprayer. Then, the pieces were dried.

On the one hand, 10 ml/100 $cm^2$ of water was uniformly sprayed onto the surface-treated piece. Then, the water-repellent effect was evaluated according to criteria shown in (D).

On the other hand, 10 $\mu$l of the spore dispersion prepared in (B) was dropwise applied on the surface-treated piece and incubated for 7 days at 28 °C under a humidity of 98 %. Then, the bactericidal and mildewcidal effect was evaluated according to the criteria shown in (D).

For comparison, the same test was carried out with using each of the bactericidal and mildewcidal agent and the repellent.

The results are shown in Tables 1 to 3.

(D) Criteria

For the evaluation of the bactericidal and mildewcidal effect (visual)

3: no growth of the inoculated strain
2: the grown strain covers less than one fourth of the whole surface area of the piece
1: the grown strain covers less than a half of the whole surface area of the piece
0: the grown strain covers more than a half of the whole surface area of the piece

For the evaluation of the water-repellent effect (visual)

+: highly satisfactory
±: satisfactory
-: unsatisfactory

Table 1

| The composition consisted of thiabendazole and fluorine-containing repellent AG-670. | | | | | | | | |
|---|---|---|---|---|---|---|---|---|
| | Test strain | Bactericidal and mildewcidal effect | | | | | | Water-repellent effect |
| | | Amount of bactericidal and mildewcidal agent (mg ai/100 cm$^2$) | | | | | | |
| | | 16 | 8 | 4 | 2 | 1 | 0 | |
| Thiabendazole | A. alternata | 0 | 0 | 0 | 0 | 0 | | - |
| | Penicillium sp. | 3 | 3 | 3 | 2 | 2 | | |
| AG-670 | A. alternata | | | | | | 0 | + |
| (35 mg/100 cm$^2$) | Penicillium sp. | | | | | | 0 | |
| Thiabendazole/AG-670 | A. alternata | 2 | 1 | 0 | 0 | 0 | | + |
| | Penicillium sp. | 3 | 3 | 3 | 3 | 2 | | |

Table 2

| The composition consisted of p-chloro-m-xylenol (PCMX) and fluorine-containing repellent TG-620. | | | | | | | | |
|---|---|---|---|---|---|---|---|---|
| | Test strain | Bactericidal and mildewcidal effect | | | | | | Water-repellent effect |
| | | Amount of bactericidal and mildewcidal agent (mg ai/100 cm$^2$) | | | | | | |
| | | 64 | 32 | 16 | 8 | 4 | 0 | |
| PCMX | A. alternata | 2 | 1 | 0 | 0 | 0 | | - |
| | Penicillium sp. | 2 | 1 | 0 | 0 | 0 | | |
| TG-620 | A. alternata | | | | | | 0 | + |
| (35 mg/100 cm$^2$) | Penicillium sp. | | | | | | 0 | |
| PCMX/TG-620 | A. alternata | 3 | 2 | 2 | 1 | 0 | | + |
| | Penicillium sp. | 3 | 3 | 2 | 1 | 0 | | |

Table 3

| The composition consisted of p-chloro-m-xylenol (PCMX) and silicone repellent SD-8000. | | | | | | | | |
|---|---|---|---|---|---|---|---|---|
| | Test strain | Bactericidal and mildewcidal effect | | | | | | Water-repellent effect |
| | | Amount of bactericidal and mildewcidal agent (mg ai/100 $cm^2$) | | | | | | |
| | | 64 | 32 | 16 | 8 | 4 | 0 | |
| PCMX | A. alternata | 2 | 1 | 0 | 0 | 0 | | - |
| | Penicillium sp. | 2 | 1 | 0 | 0 | 0 | | |
| SD-8000 | A. alternata | | | | | | 0 | + |
| (35 mg/100 $cm^2$) | Penicillium sp. | | | | | | 0 | |
| PCMX/SD-8000 | A. alternata | 3 | 2 | 2 | 1 | 0 | | + |
| | Penicillium sp. | 3 | 2 | 2 | 1 | 0 | | |

## Claims

1. A bactericidal and mildewcidal composition comprising at least one bactericidal and mildewcidal agent and at least one repellent.

2. The composition of claim 1, wherein the bactericidal and mildewcidal agent is selected from the group consisting of N-halomethyl group-containing compounds and benzimidazole-, benzothiazole-, phenol-derivatives.

3. The composition of claim 1, wherein the repellent is a fluoroalkyl group-containing polymer.

4. The composition of claim 1, wherein the repellent is a silicone compound.

5. The composition of claim 1, wherein the weight ratio of the bactericidal and mildewcidal agent to the repellent is 100 : 1 to 1 : 100.